# EUROPEAN PATENT SPECIFICATION

(11) **EP 3 535 812 B1**
(45) Date of publication and mention of the grant of the patent: **02.09.2020**
(21) Application number: 17800749.8
(22) Date of filing: 06.11.2017
(51) Int. Cl.: H01R 13/637, H01R 13/00, B60L 53/16

(54) **JUNCTION BOX, CONNECTOR AND A METHOD FOR EJECTING THE CONNECTOR**
ANSCHLUSSDOSE, VERBINDER UND VERFAHREN ZUM AUSWERFEN DES VERBINDERS
BOÎTE DE JONCTION, CONNECTEUR, ET PROCÉDÉ D'ÉJECTION DU CONNECTEUR

(30) Priority: 07.11.2016 SE 1651460
(43) Date of publication of application: 11.09.2019
(73) Proprietor: CEJN AB, 541 25 Skövde (SE)
(72) Inventor: NYFELT, Leif, SE-541 25 Skövde (SE)
(74) Representative: Murgitroyd & Company
(86) International application number: PCT/EP2017/078273
(87) International publication number: WO 2018/083287

(56) References cited:
- CN-U- 202 213 567
- CN-U- 205 017 067
- US-A- 4 286 834
- US-A1- 2010 315 040
- US-A1- 2012 043 935
- US-A1- 2014 021 915
- US-B1- 6 471 530

## Description

### Technical Field

The present disclosure relates to a junction box and a connector therefor and a method for ejecting the connector. More particularly, the junction box is a female part of a coupling, a socket, for electricity and fluid, liquid and gas, mountable on a vehicle. More particularly, the connector is male part of the coupling, a plug, for electricity and fluid, liquid and gas, connectable to the junction box. The junction box and coupling may be used for rescue vehicles.

### Background

Rescue vehicles, such as fire trucks, ambulances, etc. must have a constant supply of electricity and air when they are in stand-by, not used. Thus, when a rescue vehicle is parked in a fire station, then it is supplied with electricity and air. This allows the rescue vehicles to have a fully charged battery and all their pneumatic equipment to be fully loaded and ready to go whenever needed. It is a problem how to provide this supply. While a rescue vehicle may have a connection for external electric power supply or air, there is no standard for such connections. US 2012/043935 discloses a station for rapidly charging an electric vehicle battery and US 2014/021915 discloses a vehicle recharging station and support device, and may be useful for understanding the background.

When many rescue vehicles are used from one fire station, then back-up rescue vehicles from another fire station may be sent. It is a problem that it can not be ensured that these back-up rescue vehicles from another fire station can be supplied with electricity and air because of incompatible couplings. For example, if a fire truck has a specific junction box, such as a Rettbox (registered trademark), then only a special connector can connect with the Rettbox to provide the fire truck with electric power and air. If no such special connector is present, then the fire truck is not supplied with electric power or air.

It is desirable to provide a coupling to rescue vehicles that can overcome the above mentioned problems, but that is also inexpensive to manufacture, is easy to manufacture, and is robust. The coupling must also be able to be installed in rescue vehicles and used in existing fire stations etc. The present disclosure is directed to overcoming one or more of the problems as set forth above.

### Summary of the Invention

It is an object of the present invention to provide junction box, for electricity and fluid, mountable on a vehicle, a connector, for electricity and fluid, connectable to the junction box, and a method for ejecting the connector from the junction box. This object can be achieved by the features as defined by the independent claims 1, 8 and 13. Further enhancements are characterised by the dependent claims.

According to one embodiment, a junction box, for electricity and fluid, mountable on a vehicle, is disclosed. Fluid includes both gas and liquid. The junction box comprises a housing. The housing having a disk shaped front face. The junction box comprises one or more fluid ejectors, the one or more fluid ejectors being able to be activated by an electric circuit of the vehicle. The junction box comprises an electric coupling, a fluid coupling, an indicator for indicating electric power supply, and an indicator for indicating fluid pressure. The one or more fluid ejectors, the electric coupling, the fluid coupling, and the two indicators are all arranged within the disk shaped front face of the housing.

According to one embodiment, the one or more fluid ejectors are two fluid ejectors using the fluid from a fluid source on the vehicle and the fluid from the fluid coupling.

According to one embodiment, the junction box further comprises a hall sensor, the hall sensor being arranged within the disk shaped front face of the housing.

According to one embodiment, the electric coupling and the fluid coupling are arranged on a same line, the line crossing a centre of the disk shaped front face.

According to one embodiment, the electric coupling is a standard electric coupling and the fluid coupling is a standard fluid coupling. According to one embodiment, the fluid coupling is a nipple for a quick fit coupling, preferably a standard nipple, and/or where the electric coupling is a standard DEFA (trade mark) or Calix (trade mark) socket for an electric vehicle cable.

According to one embodiment, the junction box further comprises a spring loaded cover for covering the disk shaped front face of the housing.

According to one embodiment, a connector, for electricity and fluid, connectable to the junction box according to any one of the preceding embodiments is disclosed. The connector comprises a body, the body having a disk shaped front face. The connector comprising a handle attached to the body; a first opening for an electric coupling; a second opening for a fluid coupling; an indicator for indicating electric power supply; and an indicator for indicating fluid pressure. The first and second openings, and the two indicators are all arranged within the disk shaped front face of the body.

According to one embodiment, the connector may further comprise a quick fit coupling with a locking sleeve, wherein the second opening of the body may be connected to the locking sleeve.

According to one embodiment, the connector may further comprise a magnet arranged within the disk shaped front face of the body.

According to one embodiment, the handle may be attached to the body with two attachment points. The first and second openings may be arranged on a first line going through a centre of the disk, and the two attachment points of the handle may be arranged on a second line going through the centre of the disk. The first line and the second line may be perpendicular to each other.

According to one embodiment, the indicator for indicating electric power supply on the connector may be a light guide for the indicator for indicating electric power supply on the junction box, and the indicator for indicating fluid pressure on the connector may be a light guide for the indicator for indicating fluid pressure on the junction box.

According to one embodiment, a method for ejecting the connector according to any one of the above embodiments from the junction box according to any one of the above embodiments is disclosed. The connector is initially coupled to the junction box. The method comprising the steps of firstly turning on an ignition system of a vehicle with the junction box; secondly the ignition system activating the one or more fluid ejectors ejecting the connector; and thirdly the spring loaded cover closing the disk shaped front face of the housing of the junction box.

According to one embodiment, the method further comprises the hall sensor indicating if the connector is coupled with the junction box, and the ejection only takes place if the connector is coupled with the junction box.

According to one embodiment, independent, or dependent on the other embodiments disclosed herein, the junction box, according to any one of the embodiments disclosed herein, is provided with fluid and electricity by using the connector according to any one of the embodiments disclosed herein, and also providing an alternative electricity connection to the junction box by using a standard DEFA or Calix electric vehicle cable directly connectable to the junction box, and also providing an alternative fluid connection to the junction box by a quick fit coupling directly connectable to the junction box.

At least one of the above embodiments provides one or more solutions to the problems and disadvantages with the background art. Other technical advantages of the present disclosure will be readily apparent to one skilled in the art from the following description and claims. Various embodiments of the present application obtain only a subset of the advantages set forth. No one advantage is critical to the embodiments. Any claimed or described embodiment may be technically combined with any other claimed or described embodiment(s).

### Brief Description of the Drawings

The accompanying drawings illustrate presently exemplary embodiments of the disclosure, and together with the general description given above and the detailed description of the embodiments given below, serve to explain, by way of example, the principles of the disclosure.
FIG. 1 is a diagrammatic illustration of a junction box and a connector according to an exemplary embodiment of the present disclosure;
FIG. 2 is a diagrammatic illustration seen from the front of a junction box according to an exemplary embodiment of the present disclosure;
FIG. 3 is a diagrammatic illustration seen from the back of a junction box according to an exemplary embodiment of the present disclosure;
FIG. 4 is a diagrammatic illustration seen from the front of a connector according to an exemplary embodiment of the present disclosure;
FIG. 5 is a diagrammatic illustration seen from the back of a connector according to an exemplary embodiment of the present disclosure; and

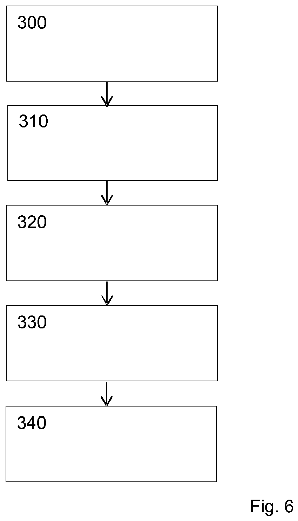

FIG. 6 shows a diagrammatic illustration of a method for ejecting the connector from the junction box according to an exemplary embodiment of the present disclosure.

### Detailed Description

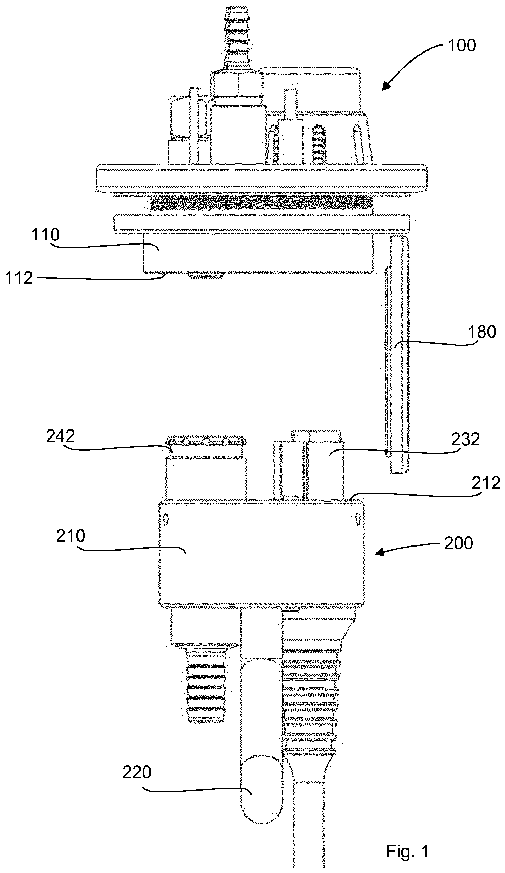

FIG. 1 is a diagrammatic illustration of a junction box 100 and a connector 200 according to an exemplary embodiment of the present disclosure. The junction box 100 may be regarded as a socket, a female part of a coupling. The connector 200 may be regarded as a male part of the coupling, a plug for the junction box 100. The junction box 100 and the connector 200 are for connecting electricity and fluid, fluid being liquid and gas, for example air, water, hydraulic fluid, etc. The junction box 100 is to be mountable on a vehicle, preferably a rescue vehicle, such as fire trucks, ambulances, etc. but other vehicles such as trucks, vans, cars, caravans, etc. may also be used. For example, the junction box 100 is installed in a fire truck that may be parked at a fire station and the connector 200 is part of the fire station, for example hanging down from the ceiling to be connected with the junction box 100. For example, the junction box 100 is installed in a car or caravan that may be parked in a garage and the connector 200 is part of the garage.

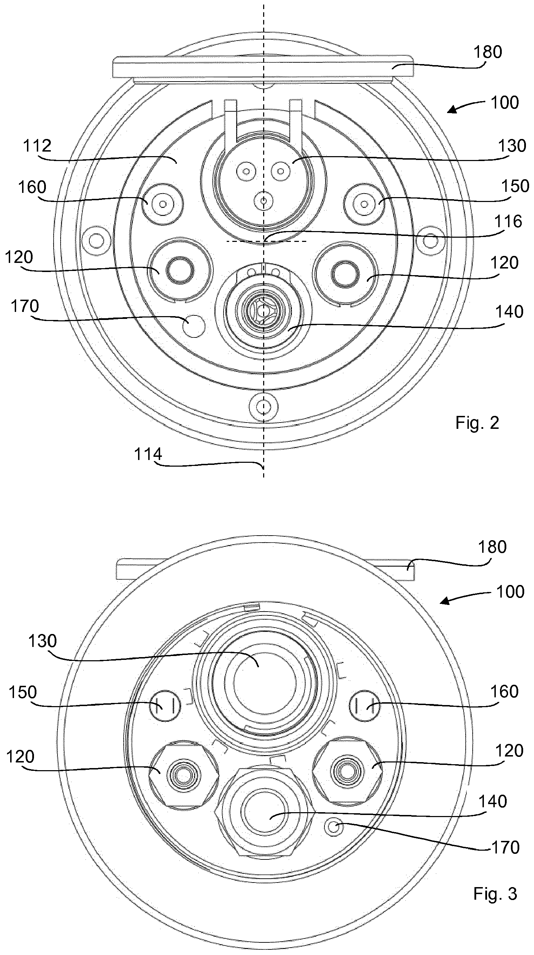

Turning to the junction box first, FIG 2 is a diagrammatic illustration seen from the front of the junction box 100 according to an exemplary embodiment of the present disclosure and FIG. 3 is a diagrammatic illustration seen from the back of the junction box 100 according to an exemplary embodiment of the present disclosure. The junction box 100 comprises a housing 110, the housing having a disk shaped front face 112. The disk shape is to be understood in a geometric sense, namely, the disk being the region in a plane bounded by a circle. The diameter of the disk is preferably 4 to 8 centimetres, preferably about 6 centimetres, preferably 58 millimetres.

The junction box comprises one or more fluid ejectors 120. The one or more fluid ejectors 120 are activated by an electric circuit of the vehicle, for example the ignition circuit. The one or more fluid ejectors 120 are ejectors operated by the fluid that the junction box 100 and connector 200 connect. The fluid may for example be stored under pressure within the ejectors, and when the ignition circuit is activated, the pressure is released allowing the ejectors to extend and push the connector 200 away from the junction box 100.

The junction box 100 comprises an electric coupling 130, a fluid coupling 140, an indicator 150 for indicating electric power supply, and an indicator 160 for indicating fluid pressure. Preferably, the junction box comprises one, single, electric coupling 130; one, single, fluid coupling 140; one, single indicator 150 for indicating electric power supply; and one, single, indicator 160 for indicating fluid pressure. The indicator 150 for indicating electric power supply may give a green light when electricity is flowing between the junction box 100 and the connector 200. The indicator 160 for indicating fluid pressure may give a green light when the pressure in the fluid coupling 140 in the junction box 100 is about 8 bar, 0.8 MPa, or more. The one or more fluid ejectors 120, preferably two fluid ejectors 120, the electric coupling 130, the fluid coupling 140, and the two indicators 150, 160 are all arranged within the disk shaped front face 112 of the housing 110. By fitting all within the disk shaped front face 112 of the housing 110 a compact size of the junction box 100, and the connector 200, is achieved. A compact size gives as a technical effect that the fitting of the junction box 100 to a vehicle is easier, quicker, and more robust. A round hole of such a compact size is also a good technical way to cut open a vehicle, especially when compared with other shapes, such as for example squares, or triangles. Thus, a technical advantage of the junction box 100 is its easy and robust mechanical installation into existing or new rescue vehicles.

According to one embodiment, the one or more fluid ejectors 120 are two fluid ejectors 120 using the fluid from a fluid source on the vehicle and the fluid from the fluid coupling 140. In other words, the two fluid ejectors 120 can use the fluid from the fluid source on the vehicle, for example the vehicles brake system or rescue tool system, and the fluid from the fluid coupling 140, for example the fluid supplied to the junction box 100 by the connector 200. By providing the ejectors with fluid from these two different fluid supplies, for example the fluid source from the compressor in a fire station or from the vehicle itself, both alternatives supply fluid and if one is not up to the required pressure or malfunctions, then the other fluid supply ensures that the ejectors can eject.

According to one embodiment, the junction box 100 further comprises a hall sensor 170. The hall sensor 170 may be arranged within the disk shaped front face 112 of the housing 110. The hall sensor 170 is arranged on the junction box 100 for sensing the presence of the connector 200. This may be done, for example, by sensing the presence of a magnet 270 in the connector 200. This indicates if an ejection is necessary or not when the vehicle starts. This indicates if the connector 200 is engaged with the junction box 100 or not. The hall sensor 170 may be a hall effect sensor 170, a transducer that varies its output voltage in response to a magnetic field, for example the magnet 270.

According to one embodiment, the electric coupling 130 and the fluid coupling 140 are arranged on a same line 114, the line 114 crossing a centre 116 of the disk shaped front face 112. By arranging the electric coupling 130 and the fluid coupling 140 in line 144 over the centre 116 of the disk shaped front face 112 of the housing 110 of the junction box 100, the junction box can be made compact. The line 114 may be arranged to be vertical or horizontal through the centre 116 of the disk shaped front face 112 of the housing 110 of the junction box 100, having as a technical effect that the junction box 100 and the connector 200 will be well balanced when being connected or ejected. Preferably, the two ejectors 120 are arranged on equal opposite sides of the line 114. This will further improve balanced connection and ejection, as well as the junction box 100 and the connector 200 to be compact in size.

According to one embodiment, the electric coupling 130 is a standard electric coupling 130 and the fluid coupling 140 is a standard fluid coupling. A technical effect of using standard couplings 130, 140 for the junction box 100 is that not only can a connector 200 connect to the junction box 100, but in case a connector 200 is not present, then a standard electric cable and a standard fluid hose can be connected directly to the standard electric coupling 130 and the standard fluid coupling 140, respectively.

According to one embodiment, the fluid coupling 140 is a nipple for a quick fit coupling, preferably a nipple from the series 320 by CEJN, and/or the electric coupling 130 is a standard DEFA or Calix socket for an electric vehicle cable. This gives a similar technical advantage as mentioned above, where a standard electric cable can be connected directly to the standard DEFA or Calix sockets 130 and a standard fluid hose can be connected directly to the nipple 140, regardless of the connector 200.

According to one embodiment, the junction box 100 further comprises a spring loaded cover 180 for covering the disk shaped front face 112 of the housing 110. The cover 180 is to protect the junction box 100 from dust and fluid when not in use. By making the cover 180 spring loaded, the spring loaded cover 180 will automatically close when the connector 200 is ejected from the junction box 100.

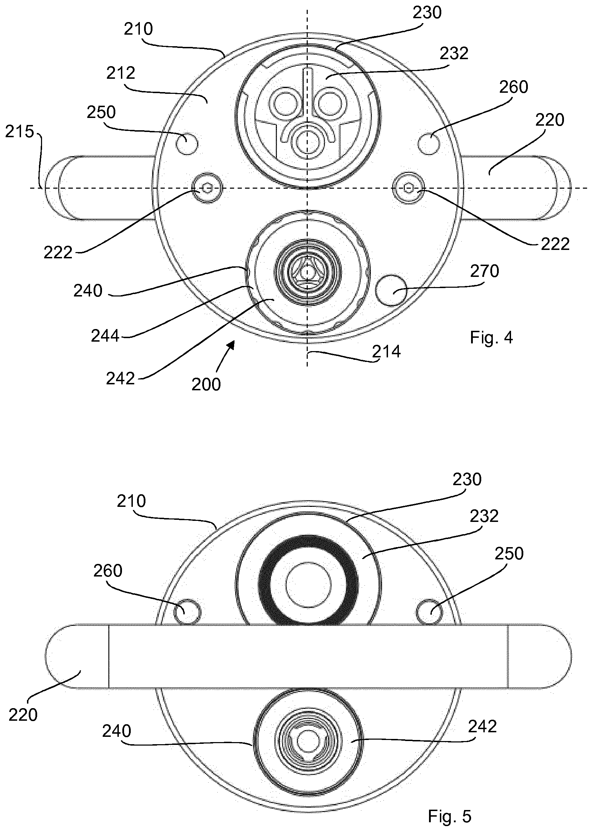

Turning to the connector 200, FIG. 4 is a diagrammatic illustration seen from the front of the connector 200 according to an exemplary embodiment of the present disclosure, and FIG. 5 is a diagrammatic illustration seen from the back of the connector 200 according to an exemplary embodiment of the present disclosure. The fronts of the junction box 100 and the connector 200 are the sides that face each other when being connected to each other. The connector 200 may be regarded as the male part of the coupling, the plug for the junction box 100. The connector 200 is for connecting electricity and fluid to the junction box 100 by connecting the connector 200 to the junction box 100 according to any one of the preceding embodiments. Fluid includes liquid and gas. As an example, the connector 200 may be installed in a fire station. For example, a fluid hose from a fluid supply, for example air, and an electric cable from an electric power supply may be attached to the connector. For example, the connector 200 may then be connected to the junction box 100 to supply fluid and electricity to a fire truck or other vehicle in the fire station.

The connector 200 comprises a body 210. The body 210 may be shaped like a puck, a cylinder. The body 210 has a disk shaped front face 212. The disk shaped front face 212 of the body 210 matches in size the disk shaped front face 112 of the housing 110 of the junction box 100. The disk shape is to be understood in a geometric sense, namely, the disk being the region in a plane bounded by a circle. The diameter of the disk is preferably 4 to 8 centimetres, preferably about 6 centimetres, preferably 58 millimetres.

The connector 200 comprises a handle 220 attached to the body. The handle 220 is for holding the connector 200 when connecting the connector to the junction box 100. The handle 220 is also configured to protect the connector 200 when the connector 200 is ejected from the junction box 100 and may hit a surface, for example the floor. The handle 220 is also configured to be attachable to a holder, such as for example a rope, a wire, a stand, an arm, etc. These configurations are achieved by the shape of the handle 220 as illustrated in FIGs 1, 4, and 5, and as further explained below.

The connector 200 comprises a first opening 230 for an electric coupling and a second opening 240 for a fluid coupling. The first opening 230 may be one, single, first opening 230 for one, single, electric coupling. The second opening 240 may be one, single, second opening 240 for one, single, fluid coupling.

The connector 200 comprises an indicator for indicating electric power supply 250, and an indicator for indicating fluid pressure 260. The indicator for indicating electric power supply 250 may be one, single, indicator 250 for indicating electric power supply. The indicator for indicating fluid pressure 260 may be one, single, indicator 260 for indicating fluid pressure. The indications indicate that electric power is connected and that the fluid pressure has reached a predetermined pressure.

The first opening 230, the second opening 240, the indicator for indicating electric power supply 250, the indicator for indicating fluid pressure 260 are all arranged within the disk shaped front face 212 of the body 210. Furthermore, attachments 222 for the handle 220 may also be arranged within the disk shaped front face 212 of the body 210. By fitting all within the disk shaped front face 212 of the connector 210 a compact size is achieved. A compact size gives as a technical effect that the junction box 100 can be made in the same compact size and the junction box's fitting to a vehicle is easier, quicker, and more robust. A further technical effect is that the puck shaped body 210 is easy to fit into the junction box 100.

According to one embodiment, the connector 200 may further comprise a quick fit coupling 242 with a locking sleeve 244, wherein the second opening 240 of the body 210 is connected to the locking sleeve 244. The body 210 of the connector 200 may be connected to the locking sleeve 244 of the quick fit coupling 242 so that when the connector 200 is pulled, or ejected, away from the junction box 100, the connector 200 pulls the locking sleeve 244 backwards relative to the quick fit coupling 242, thereby unlocking the quick fit coupling 242 from the nipple of the fluid coupling 140 on the junction box 100. This has as a technical effect that the quick fit coupling can be uncoupled from the junction box 100 by the connector 200, since the connector 200 then pulls the locking sleeve 244 to release the fluid coupling making disconnection possible, even with use of the one or more fluid ejectors 120.

According to one embodiment, the connector 200 may further comprise a magnet 270 arranged within the disk shaped front face 212 of the body 210. The magnet 270 may be arranged to co-operate with the hall sensor 170. In this way the sensor 170 indicates if the junction box 100 and the connector 200 are engaged or not, or if an ejection by the one or more fluid ejectors 120 needs to be done when the vehicle starts.

According to one embodiment, the handle 220 may be attached to the body 210 with two attachment points 222. The attachment points may be one or more bolts going through the body, from the front of the body to the back of the body, and screwed into the end or ends of the handle. The first opening 230 and the second opening 240 may be arranged on a first line 214 going through a centre of the disk. The two attachment points 222 of the handle 220 may be arranged on a second line 215 going through the centre of the disk. The first line 214 and the second line 215 may be perpendicular to each other. A technical effect of this is that this provides a stable hold of the connector when coupling the connector 200 with the junction box 100.

According to one embodiment, the handle 220 may be shaped as a U, where the two attachment points 222 are the top of the U-shape and the handle 220 for gripping is the sides and/or the bottom of the U-shape. The two sides of the U-shaped handle 220 may converge, incline, towards each other, and the bottom of the U-shaped handle 220 may be fairly straight. The handle 220 may instead be T-shaped.

According to one embodiment, the indicator 250 for indicating electric power supply on the connector 200 may be a light guide 250 for the indicator 150 for indicating electric power supply on the junction box 100. The indicator 260 for indicating fluid pressure on the connector 200 may be a light guide 260 for the indicator 160 for indicating fluid pressure on the junction box 200. The light guides 250 and 260 may lead the lights from the indicators 150 and 160, respectively, through the body 210 of the connector 200. In this way the indicators 150 and 160 are visible when the connector 200 is engaged with the junction box 100, but also visible if separate cables are connected directly to the junction box 100 without the use of the connector 200.

According to one embodiment, a method for ejecting the connector 200 according to any one of the embodiments disclosed herein from the junction box 100 according to any one of the embodiments disclosed herein. When the connector 100 is coupled to the junction box 200, to eject the connector from the junction box 100, the following steps may be taken. Firstly, an ignition system of a vehicle is turned on, the junction box 100 being mounted on the vehicle. Secondly, the ignition system activates the one or more fluid ejectors 120 and the one or more fluid ejectors 120 eject the connector 200 from the junction box 100. Thirdly, the spring loaded cover 180 closes the disk shaped front face 112 of the housing 110 of the junction box 100. This ejection of the connector 200 from the junction box 100 is very reliable because it uses fluid ejectors and the fluid ejectors are fed from two different sources as explained above.

According to one embodiment, the method further comprises the following step. Preferably, this step is taken after the first step and before the second step mentioned above. The hall sensor 170 indicating if the connector 200 is coupled with the junction box 100, and the ejection only takes place if the connector 200 is coupled with the junction box 100.

According to one embodiment, an independent method comprises, or the method as above further comprises, providing connection to the junction box 100 according to any one of the embodiments disclosed herein by using the connector 200 according to any one of the embodiment disclosed herein, and also providing an alternative electricity connection to the junction box 100 by using a standard DEFA or Calix electric vehicle cable directly connectable to the junction box, and also providing an alternative fluid connection to the junction box 100 by a quick fit coupling directly connectable to the junction box. In this way fluid and electricity may be connected to the junction box 100 without the use of the connector 200 by simply using standard cables and hoses. It is thus possible to connect fluid and electricity to the junction box 100 by using the connector 200 or by using, as an alternative to the connector 200, standard cables, because the standard cables may be connected directly to the junction box 100. This allows a vehicle having the junction box 100 installed to always be supplied with fluid and electricity.

It will be apparent to those skilled in the art that various modifications and variations can be made to the embodiments disclosed above. Other embodiments will be apparent to those skilled in the art from consideration of the specification and practice of the disclosed junction box, connector, and methods. It is intended that the specification and examples be considered as exemplary only, with a true scope being indicated by the following claims.

### List of elements

- 100: junction box
- 110: housing
- 112: disk shaped front face of the housing
- 114: line
- 116: centre
- 120: one or more fluid ejectors
- 130: electric coupling
- 140: fluid coupling
- 150: indicator for indicating electric power supply
- 160: indicator for indicating fluid pressure
- 170: hall sensor
- 180: cover
- 200: connector
- 210: body
- 212: disk shaped front face of the body
- 214: first line
- 215: second line
- 220: handle
- 222: attachment points for handle
- 230: first opening for electric coupling
- 232: electric coupling
- 240: second opening for fluid coupling
- 242: quick fit coupling
- 244: locking sleeve
- 250: indicator for indicating electric power supply
- 260: indicator for indicating fluid pressure
- 270: magnet
- 300: method step 1
- 310: method step 2
- 320: method step 3
- 330: method step 4
- 340: method step 5

## Claims

1. Junction box, for electricity and fluid, mountable on a vehicle, the junction box (100) comprising:
a housing (110), the housing having a disk shaped front face (112); one electric coupling (130); and
one fluid coupling (140);
**characterised by**
one or more fluid ejectors (120), for ejecting a connector connected to the junction box, the one or more fluid ejectors being able to be activated by an electric circuit of the vehicle;
one indicator for indicating electric power supply (150); and
one indicator for indicating fluid pressure (160);
wherein the one or more fluid ejectors, the electric coupling, the fluid coupling, and the two indicators are all arranged within the disk shaped front face of the housing.

2. The junction box according to claim 1, wherein the one or more fluid ejectors (120) are two fluid ejectors (120) using the fluid from a fluid source on the vehicle and the fluid from the fluid coupling (140).

3. The junction box according to claim 1 or 2, further comprising a hall sensor (170), the hall sensor being arranged within the disk shaped front face of the housing.

4. The junction box according to any one of the preceding claims, wherein the electric coupling and the fluid coupling are arranged on a same line (114), the line crossing a centre of the disk shaped front face.

5. The junction box according to any one of the preceding claims, wherein the electric coupling is a standard electric coupling and the fluid coupling is a standard fluid coupling.

6. The junction box according to any one of the preceding claims, wherein the fluid coupling is a nipple for a quick fit coupling, preferably a standard nipple, and/or where the electric coupling is a standard DEFA or Calix socket for an electric vehicle cable.

7. The junction box according to any one of the preceding claims, further comprising a spring loaded cover (180) for covering the disk shaped front face of the housing.

8. Connector, for electricity and fluid, connectable to the junction box according to any one of the preceding claims, the connector comprising:
a body (210), the body having a disk shaped front face (212);
a handle (220) attached to the body;
a first opening for one electric coupling (230); and
a second opening for one fluid coupling (240);
**characterised by**
one indicator for indicating electric power supply (250); and
one indicator for indicating fluid pressure (260);
wherein the first and second openings, and the two indicators are all arranged within the disk shaped front face of the body.

9. The connector according to claim 8, further comprising a quick fit coupling (242) with a locking sleeve (244), wherein the second opening of the body is connected to the locking sleeve.

10. The connector according to claim 8 or 9, further comprising a magnet (270) arranged within the disk shaped front face of the body.

11. The connector according to any one of claims 8 to 10, wherein the handle is attached to the body with two attachment points (222);
wherein the first and second openings are arranged on a first line (214) going through a centre of the disk, and the two attachment points of the handle are arranged on a second line (215) going through the centre of the disk; and
wherein the first line and the second line are perpendicular to each other.

12. The connector according to any one of claims 8 to 11, wherein the indicator for indicating electric power supply on the connector is a light guide (250) for the indicator for indicating electric power supply on the junction box, and wherein the indicator for indicating fluid pressure on the connector is a light guide (260) for the indicator for indicating fluid pressure on the junction box.

13. Method for ejecting the connector according to any one of claims 8 to 12 from the junction box according to any one of claims 1 to 7, the connector being coupled to the junction box, the method being **characterised by** comprising the steps of:
(300) turning on an ignition system of a vehicle with the junction box (100);
(310) the ignition system activating the one or more fluid ejectors ejecting the connector (200); and
(320) a spring loaded cover (180) closing the disk shaped front face of the housing of the junction box.

14. The method according to claim 13, further comprising the step (330) of the hall sensor indicating if the connector is coupled with the junction box, and the ejection only takes place if the connector is coupled with the junction box.

15. The method according to claim 13 or 14, the method being **characterised by** comprising:
the step (340) of providing fluid and electricity connections to the junction box (100) according to any one of the claims 1 to 7 by using the connector (200) according to any one of the claims 8 to 12, and also providing an alternative electricity connection to the junction box (100) by using a standard DEFA or Calix electric vehicle cable directly connectable to the junction box, and also providing an alternative fluid connection to the junction box (100) by a quick fit coupling directly connectable to the junction box.

## Patentansprüche

1. Eine Anschlussdose, für Elektrizität und Fluid, die an einem Fahrzeug montiert werden kann, wobei die Anschlussdose (100) Folgendes beinhaltet:
ein Gehäuse (110), wobei das Gehäuse eine scheibenförmige vordere Fläche (112) aufweist;
eine elektrische Kupplung (130); und
eine Fluidkupplung (140);
**gekennzeichnet durch**
einen oder mehrere Fluidausstoßer (120) zum Ausstoßen eines Verbinders, der mit der Anschlussdose verbunden ist, wobei der eine oder die mehreren Fluidausstoßer durch einen Stromkreis des Fahrzeugs aktiviert werden können;
eine Anzeige zum Anzeigen einer Stromversorgung (150); und
eine Anzeige zum Anzeigen eines Fluiddrucks (160);
wobei der eine oder die mehreren Fluidausstoßer, die elektrische Kupplung, die Fluidkupplung und die zwei Anzeigen alle in der scheibenförmigen vorderen Fläche des Gehäuses angeordnet sind.

2. Anschlussdose gemäß Anspruch 1, wobei der eine oder die mehreren Fluidausstoßer (120) zwei Fluidausstoßer (120) sind, die das Fluid aus einer Fluidquelle an dem Fahrzeug und das Fluid aus der Fluidkupplung (140) verwenden.

3. Anschlussdose gemäß Anspruch 1 oder 2, die ferner einen Hall-Sensor (170) beinhaltet, wobei der Hall-Sensor in der scheibenförmigen vorderen Fläche des Gehäuses angeordnet ist.

4. Anschlussdose gemäß einem der vorhergehenden Ansprüche, wobei die elektrische Kupplung und die Fluidkupplung auf einer gleichen Linie (114) angeordnet sind, wobei die Linie einen Mittelpunkt der scheibenförmigen vorderen Fläche kreuzt.

5. Anschlussdose gemäß einem der vorhergehenden Ansprüche, wobei die elektrische Kupplung eine elektrische Standard-Kupplung ist und die Fluidkupplung eine Standard-Fluidkupplung ist.

6. Anschlussdose gemäß einem der vorhergehenden Ansprüche, wobei die Fluidkupplung ein Nippel für eine Schnellpasskupplung ist, vorzugsweise ein Standardnippel, und/oder wobei die elektrische Kupplung eine Standard-DEFA- oder-Calix-Steckdose für ein Kabel eines elektrischen Fahrzeugs ist.

7. Anschlussdose gemäß einem der vorhergehenden Ansprüche, die ferner eine federbelastete Abdeckung (180) zum Abdecken der scheibenförmigen vorderen Fläche des Gehäuses beinhaltet.

8. Ein Verbinder, für Elektrizität und Fluid, der mit der Anschlussdose gemäß einem der vorhergehenden Ansprüche verbunden werden kann, wobei der Verbinder Folgendes beinhaltet:
einen Körper (210), wobei der Körper eine scheibenförmige vordere Fläche (212) aufweist;
einen Griff (220), der an dem Körper befestigt ist;
eine erste Öffnung für eine elektrische Kupplung (230); und
eine zweite Öffnung für eine Fluidkupplung (240);
**gekennzeichnet durch**
eine Anzeige zum Anzeigen einer Stromversorgung (250); und
eine Anzeige zum Anzeigen eines Fluiddrucks (260);
wobei die erste und zweite Öffnung und die zwei Anzeigen alle in der scheibenförmigen vorderen Fläche des Körpers angeordnet sind.

9. Verbinder gemäß Anspruch 8, der ferner eine Schnellpasskupplung (242) mit einer Sperrhülse (244) beinhaltet, wobei die zweite Öffnung des Körpers mit der Sperrhülse verbunden ist.

10. Verbinder gemäß Anspruch 8 oder 9, der ferner einen Magneten (270) beinhaltet, der in der scheibenförmigen vorderen Fläche des Körpers angeordnet ist.

11. Verbinder gemäß einem der Ansprüche 8 bis 10, wobei der Griff mit zwei Befestigungspunkten (222) an dem Körper befestigt ist;
wobei die erste und zweite Öffnung auf einer ersten Linie (214) angeordnet sind, die durch einen Mittelpunkt der Scheibe geht, und die zwei Befestigungspunkte des Griffs auf einer zweiten Linie (215) angeordnet sind, die durch den Mittelpunkt der Scheibe geht; und
wobei die erste Linie und die zweite Linie senkrecht zueinander sind.

12. Verbinder gemäß einem der Ansprüche 8 bis 11, wobei die Anzeige zum Anzeigen einer Stromversorgung auf dem Verbinder ein Lichtleiter (250) für die Anzeige zum Anzeigen einer Stromversorgung auf der Anschlussdose ist, und wobei die Anzeige zum Anzeigen eines Fluiddrucks auf dem Verbinder ein Lichtleiter (260) für die Anzeige zum Anzeigen eines Fluiddrucks auf der Anschlussdose ist.

13. Ein Verfahren zum Ausstoßen des Verbinders gemäß einem der Ansprüche 8 bis 12 aus der Anschlussdose gemäß einem der Ansprüche 1 bis 7, wobei der Verbinder mit der Anschlussdose gekoppelt ist, wobei das Verfahren **dadurch gekennzeichnet ist, dass** es die folgenden Schritte beinhaltet:
(300) Einschalten eines Zündsystems eines Fahrzeugs mit der Anschlussdose (100);
(310) Aktivieren, durch das Zündsystem, des einen oder der mehreren Fluidausstoßer, die den Verbinder (200) ausstoßen; und
(320) Schließen, durch eine federbelastete Abdeckung (180), der scheibenförmigen vorderen Fläche des Gehäuses der Anschlussdose.

14. Verfahren gemäß Anspruch 13, das ferner den Schritt (330) beinhaltet, dass der Hall-Sensor anzeigt, wenn der Verbinder mit der Anschlussdose gekoppelt ist, und die Ausstoßung nur stattfindet, wenn der Verbinder mit der Anschlussdose gekoppelt ist.

15. Verfahren gemäß Anspruch 13 oder 14, wobei das Verfahren **dadurch gekennzeichnet ist, dass** es Folgendes beinhaltet:
den Schritt (340) des Bereitstellens von Fluid- und Elektrizitätsverbindungen an die Anschlussdose (100) gemäß einem der Ansprüche 1 bis 7 durch das Verwenden des Verbinders (200) gemäß einem der Ansprüche 8 bis 12, und auch das Bereitstellen einer alternativen Elektrizitätsverbindung an die Anschlussdose (100) durch das Verwenden eines Standard-DEFA- oder-Calix-Kabels für ein elektrisches Fahrzeug, das direkt mit der Anschlussdose verbunden werden kann, und auch das Bereitstellen einer alternativen Fluidverbindung an die Anschlussdose (100) durch eine Schnellpasskupplung, die direkt mit der Anschlussdose verbunden werden kann.

## Revendications

1. Boîte de jonction, pour électricité et fluide, pouvant être installée sur un véhicule, la boîte de jonction (100) comprenant :
un boîtier (110), le boîtier ayant une face avant en forme de disque (112) ;
un élément de couplage électrique (130) ; et
un élément de couplage hydraulique (140) ;
**caractérisée par**
un ou plusieurs éjecteurs à fluide (120), destinés à éjecter un connecteur connecté à la boîte de jonction, les un ou plusieurs éjecteurs à fluide étant à même d'être activés par un circuit électrique du véhicule ;
un indicateur destiné à indiquer une alimentation en courant électrique (150) ; et
un indicateur destiné à indiquer une pression de fluide (160) ;
dans laquelle les un ou plusieurs éjecteurs à fluide, l'élément de couplage électrique, l'élément de couplage hydraulique, et les deux indicateurs sont tous disposés au sein de la face avant en forme de disque du boîtier.

2. La boîte de jonction selon la revendication 1, dans laquelle les un ou plusieurs éjecteurs à fluide (120) sont deux éjecteurs à fluide (120) utilisant le fluide provenant d'une source de fluide sur le véhicule et le fluide provenant de l'élément de couplage hydraulique (140).

3. La boîte de jonction selon la revendication 1 ou la revendication 2, comprenant en outre un capteur à effet Hall (170), le capteur à effet Hall étant disposé au sein de la face avant en forme de disque du boîtier.

4. La boîte de jonction selon l'une quelconque des revendications précédentes, dans laquelle l'élément de couplage électrique et l'élément de couplage hydraulique sont disposés sur une même ligne (114), cette ligne entrecoupant un centre de la face avant en forme de disque.

5. La boîte de jonction selon l'une quelconque des revendications précédentes, dans laquelle l'élément de couplage électrique est un élément de couplage électrique standard et l'élément de couplage hydraulique est un élément de couplage hydraulique standard.

6. La boîte de jonction selon l'une quelconque des revendications précédentes, dans laquelle l'élément de couplage hydraulique est un mamelon pour un élément de couplage à raccordement rapide, de préférence un mamelon standard, et/ou où l'élément de couplage électrique est une prise DEFA ou Calix standard pour un câble de véhicule électrique.

7. La boîte de jonction selon l'une quelconque des revendications précédentes, comprenant en outre un couvercle à ressort (180) destiné à couvrir la face avant en forme de disque du boîtier.

8. Connecteur, pour électricité et fluide, pouvant être connecté à la boîte de jonction selon l'une quelconque des revendications précédentes, le connecteur comprenant :
un corps (210), le corps ayant une face avant en forme de disque (212) ;
une poignée (220) attachée au corps ;
une première ouverture pour un élément de couplage électrique (230) ; et
une deuxième ouverture pour un élément de couplage hydraulique (240) ;
**caractérisé par**
un indicateur destiné à indiquer une alimentation en courant électrique (250) ; et
un indicateur destiné à indiquer une pression de fluide (260) ;
dans lequel les première et deuxième ouvertures, et les deux indicateurs sont tous disposés au sein de la face avant en forme de disque du corps.

9. Le connecteur selon la revendication 8, comprenant en outre un élément de couplage à raccordement rapide (242) avec un manchon de verrouillage (244), dans lequel la deuxième ouverture du corps est connectée au manchon de verrouillage.

10. Le connecteur selon la revendication 8 ou la revendication 9, comprenant en outre un aimant (270) disposé au sein de la face avant en forme de disque du corps.

11. Le connecteur selon l'une quelconque des revendications 8 à 10, dans lequel la poignée est attachée au corps à l'aide de deux points d'attache (222) ;
dans lequel les première et deuxième ouvertures sont disposées sur une première ligne (214) traversant un centre du disque, et les deux points d'attache de la poignée sont disposés sur une deuxième ligne (215) traversant le centre du disque ; et
dans lequel la première ligne et la deuxième ligne sont perpendiculaires l'une à l'autre.

12. Le connecteur selon l'une quelconque des revendications 8 à 11, dans lequel l'indicateur destiné à indiquer une alimentation en courant électrique sur le connecteur est un guide lumineux (250) pour l'indicateur destiné à indiquer une alimentation en courant électrique sur la boîte de jonction, et dans lequel l'indicateur destiné à indiquer une pression de fluide sur le connecteur est un guide lumineux (260) pour l'indicateur destiné à indiquer une pression de fluide sur la boîte de jonction.

13. Procédé pour l'éjection du connecteur selon l'une quelconque des revendications 8 à 12 de la boîte de jonction selon l'une quelconque des revendications 1 à 7, le connecteur étant couplé à boîte de jonction, le procédé étant **caractérisé en ce qu'**il comprend les étapes consistant à :
(300) mettre en marche un système d'allumage d'un véhicule avec la boîte de jonction (100) ;
(310) le système d'allumage activant les un ou plusieurs éjecteurs à fluide qui éjectent le connecteur (200) ; et
(320) un couvercle à ressort (180) fermant la face avant en forme de disque du boîtier de la boîte de jonction.

14. Le procédé selon la revendication 13, comprenant en outre l'étape (330) consistant à ce que le capteur à effet Hall indique si le connecteur est couplé à la boîte de jonction, l'éjection n'ayant lieu que si le connecteur est couplé à la boîte de jonction.

15. Le procédé selon la revendication 13 ou la revendication 14, le procédé étant **caractérisé en ce qu'**il comprend :
l'étape (340) consistant à fournir des connexions de fluide et d'électricité à la boîte de jonction (100) selon l'une quelconque des revendications 1 à 7 à l'aide du connecteur (200) selon l'une quelconque des revendications 8 à 12, et aussi à fournir une autre connexion d'électricité à la boîte de jonction (100) à l'aide d'un câble pour véhicule électrique DEFA ou Calix standard pouvant être connecté directement à la boîte de jonction, et aussi à fournir une autre connexion de fluide à la boîte de jonction (100) au moyen d'un élément de couplage à raccordement rapide pouvant être connecté directement à la boîte de jonction.
